# EUROPEAN PATENT APPLICATION

(11) **EP 3 418 955 A1**
(43) Date of publication of application: **26.12.2018**
(21) Application number: 18178550.2
(22) Date of filing: 19.06.2018
(51) Int. Cl.: G06Q 10/02, G06Q 50/14

(54) **UPDATING AN ENTIRE ITINERARY BASED ON MODIFYING A SINGLE TRAVEL RESERVATION**

(30) Priority: 19.06.2017 FR 1755541; 19.06.2017 US 201715626466
(71) Applicant: Amadeus S.A.S., 06410 Biot (FR)
(72) Inventor: HAJJI, Noureddine, 06600 Antibes (FR); SANE, Papa-Birame, 06220 Vallauris (FR); RAVETTA, Florian, 06200 Nice (FR); AURARD, Thomas, 06600 Antibes (FR); DES FONTAINES, Romain, 06560 Valbonne (FR)
(74) Representative: Samson & Partner Patentanwälte mbB

(57) **Abstract**

Methods, systems, and computer program for updating an entire travel itinerary based on a modification to at least one reservation. At least one confirmation message is received by a computer. The least one confirmation message includes updated information regarding the reservation. The computer determines that the at reservation is associated with a user profile. The user profile is associated with a plurality of travel records. In response to the reservation being associated with the user profile, the computer creates a new trip item for each reservation included with the confirmation message. The new trip item is combined with each of the travel records by the computer. A respective score is assigned to each of the travel records combined with the new trip item. The respective score is based on a compatibility of a respective travel record combined with the new trip item.

## Description

### TECHNICAL FIELD

The invention generally relates to computers and computer software, and in particular to methods, systems, and computer program products system that update an entire travel itinerary based on a modification to a single travel reservation that is part of the travel itinerary.

### BACKGROUND

Third party reservation agents (i.e., travel agents) or travelers may book a variety of different travel-related reservations for various aspects of a trip. For example, some trips may require airline reservations for travel to a particular destination, a hotel reservation for lodging during the trip, and a car rental for transportation while at the particular destination. Additionally, a traveler may need to book other reservations as part of the trip as well, such as sightseeing or other travel-related activities. As a result of the different travel-related reservations that may be made in anticipation of a trip, numerous emails or other types of electronic messages are typically sent to the traveler or reservation agent. The emails inform and confirm the travel reservations that have been made. Furthermore, if a modification is made to a particular travel reservation, an email is also send confirming the particular change.

Sometimes it may be difficult for the traveler to keep track and organize all of the different email notifications from the various travel providers. Furthermore, in the event the traveler wishes to change a particular travel reservation, then the remaining travel reservations that are part of the trip may need to be adjusted as well. For example, if a traveler changes the arrival and departure dates for a flight, then the traveler's corresponding hotel and car rental reservations may also need to be adjusted in order to align with the new dates and times of the flight.

It may be challenging for a traveler or reservation agent to efficiently make all of the necessary changes when re-scheduling a portion of a trip. In fact, sometimes it takes a significant amount of time for a reservation agent to consider each change to a travel itinerary, and then use subjective measures to determine the changes that need to be made to individual travel reservations that are part of the travel itinerary. Furthermore, reservation agents need to be readily available to make the necessary changes and cancellations to a particular trip using various travel platforms such as, for example, a global distribution system (GDS) or a particular website. However, making these modifications and cancellations to an itinerary may affect the reservation agent's productivity since making changes to the itinerary take up a considerable amount of time.

It is to be appreciated that at least one GDS currently has the capability to update related bookings that are part of a single trip. However, travelers and reservation agents typically utilize more than one platform when booking multiple travel related reservations for a particular trip. There are limitations with this particular GDS, as this GDS is unable to update any travel bookings that have been made outside of its own platform. For example, a reservation agent may book airline travel through a GDS, and a rental vehicle reservation through a discount website. Therefore, even though the GDS may have the ability to update travel booking made through its own platform, the traveler or reservation agent will still need to manually update the rental vehicle reservation.

Thus, improved methods, systems, and computer program products to update travel reservation records that are based on specific rules or instructions are needed that improve computer-related technology by allowing computer performance of a function that was not previously performed by a computer.

### SUMMARY

In an embodiment of the invention, a system for updating an entire travel itinerary based on a modification to at least one reservation that is part of the entire travel itinerary is disclosed. The system includes one or more processors and a memory coupled to the processors. The memory stores data comprising program code that, when executed by the processors, causes the system to receive at least one confirmation message. The confirmation message includes updated information regarding at least one reservation. The system is also caused to determine that the reservation is associated with a user profile. The user profile is associated with a plurality of travel records. In response to the reservation being associated with the user profile, the system is further cause to create a new trip item for each reservation included with the confirmation message. The system is also caused to combine the new trip item with each of the plurality of travel records, and assign a respective score to each of the plurality of travel records that are combined with the new trip item. The respective score is based on a compatibility of a respective travel record combined with the new trip item. The system is also caused to select a specific travel record to update with the new trip item based on the respective scores of the plurality of travel records. The system is further caused to determine that the specific travel record that was selected includes write access. Finally, in response to determining that the specific travel record includes write access, the system is caused to update the specific travel record with the new trip item.

In one embodiment, in response to the specific travel record that is selected having no write access, a new travel record is created by the computer. The new travel record is updated with the new trip item.

In another embodiment, a plurality of trip items and the new trip item are chronologically ordered to form a timeline, and the trip items are each associated with one of the travel records.

In yet another embodiment, the system is caused to assign the respective score to each of the travel records that are combined with the new trip item by causing the system to determine that the new trip item overlaps with one or more of the plurality of trip items for each of the plurality of travel records. In response to determining that the new trip item does not overlap with one or more of the trip items, positive points are assigned to the respective score of one of the plurality of travel records.

In still another embodiment, the system is caused to assign the respective score to each of the travel records that are combined with the new trip item by causing the system to classify the new trip item and each of the plurality of trip items into categories. The categories include stationary, point-to-point, and roaming. The system is further caused to determine that both the new trip item and the one or more of the plurality of trip items that overlap are classified as point-to-point. In response to determining that the new trip item and the one or more of the plurality of trip items that overlap are classified as point-to-point, the system assigns negative points to the respective score of one of the plurality of travel records.

In another embodiment, the system is caused to assign the respective score to each of the travel records that are combined with the new trip item by causing the system to compare an end location of a preceding trip item with a start location of the new trip item. In response to the end location of the preceding trip item matching the start location of the new trip item, the system assigns positive points to the respective score of one of the plurality of travel records. The system is caused to compare a start location of a subsequent trip item with an end location of the new trip item. In response to the start location of the subsequent trip item matching the end location of the new trip item, the system assigns positive points to the respective score of one of the plurality of travel records. Finally, in response to the new trip item being ordered either first or last in the timeline, the system assigns positive points the respective score of one of the plurality of travel records.

In still another embodiment, the system is caused to assign the respective score to each of the travel records that are combined with the new trip item by causing the system to determine that passengers included within the at least one confirmation message match a passenger name record associated with each of the travel record. In response to the passengers included with the at least one confirmation message matching the passenger name record, the system assigns positive points to the respective score of one of the plurality of travel records.

In another embodiment, the system is caused to assign the respective score to each of the travel records that are combined with the new trip item by causing the system to determine that a number of passengers included with the at least one confirmation message is less than a total number of passengers included in a passenger name record associated with each of the plurality of travel records. In response to the number of passengers included with the at least one confirmation message being less than the total number of passengers, the system assigns positive points to the respective score of one of the plurality of travel records.

In one embodiment, the system is caused to determine that the respective score associated with one of the travel records is greater than or equal to a predetermined score. In response to the respective score associated with one of the travel records being greater than or equal to the predetermined score, the new trip item overlaps with one or more of the trip items for each of the travel records.

In another embodiment, the system is caused to determine that the respective score associated with one of the plurality of travel records is greater than or equal to a predetermined score. In response to determining that the respective score associated with one of the plurality of travel records is greater than or equal to a predetermined score, the specific travel record is updated as the selected travel record.

In yet another embodiment, selecting the specific travel record to update with the new trip item based on the respective scores of the plurality of travel records includes determining that the respective scores associated with the plurality of travel records are less than the predetermined score.

In yet another embodiment, a method of updating an entire travel itinerary based on a modification to at least one reservation that is part of the entire travel itinerary is disclosed. The method comprises receiving at least one confirmation message by a computer. The confirmation message includes updated information regarding the reservation. The method also includes determining, by the computer, that the reservation is associated with a user profile. The user profile is associated with a plurality of travel records. In response to the reservation being associated with the user profile, the method includes creating, by the computer, a new trip item for each reservation included with the confirmation message. The method also includes combining the new trip item with each of the plurality of travel records, and assigning a respective score to each of the plurality of travel records that are combined with the new trip item by the computer. The respective score is based on a compatibility of a respective travel record combined with the new trip item. The method further includes selecting, by the computer, a specific travel record to update with the new trip item based on the respective scores of the plurality of travel records. The method includes determining, by the computer, that the specific travel record that was selected includes write access. In response to determining that the specific travel record includes write access, the method includes updating the specific travel record with the new trip item.

In another embodiment of the invention, a computer program is provided for updating an entire travel itinerary based on a modification to at least one reservation that is part of the entire travel itinerary. The computer program may exist as a product comprising a non-transitory computer-readable storage medium and program code stored on the non-transitory computer-readable storage medium that, when executed by one or more processors, causes the one or more processors to to receive at least one confirmation message. The confirmation message includes updated information regarding the reservation. The system is also caused to determine that the reservation is associated with a user profile. The user profile is associated with a plurality of travel records. In response to the reservation being associated with the user profile, the system is further cause to create a new trip item for each reservation included with the confirmation message. The system is also caused to combine the new trip item with each of the plurality of travel records and assign a respective score to each of the plurality of travel records that are combined with the new trip item. The respective score is based on a compatibility of a respective travel record combined with the new trip item. The system is also caused to select a specific travel record to update with the new trip item based on the respective scores of the plurality of travel records. The system is further caused to determine that the specific travel record that was selected includes write access. Finally, in response to determining that the specific travel record includes write access, the system is caused to update the specific travel record with the new trip item.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

The accompanying drawings illustrate various embodiments of the invention and, together with the general description of the invention given above, and the detailed description of the embodiments given below, serve to explain the embodiments of the invention.
FIG. 1 is a diagrammatic view of an exemplary operating environment including a trip management system in communication with one or more global distribution systems (GDS) and/or one or more travel websites.
FIG. 2 is a diagrammatic view of an exemplary computer system of FIG. 1.
FIG. 3 is an exemplary illustration of a chronological timeline of a specific travel itinerary.
FIG. 4 illustrates a chart summarizing three different types of trip items.

### DETAILED DESCRIPTION

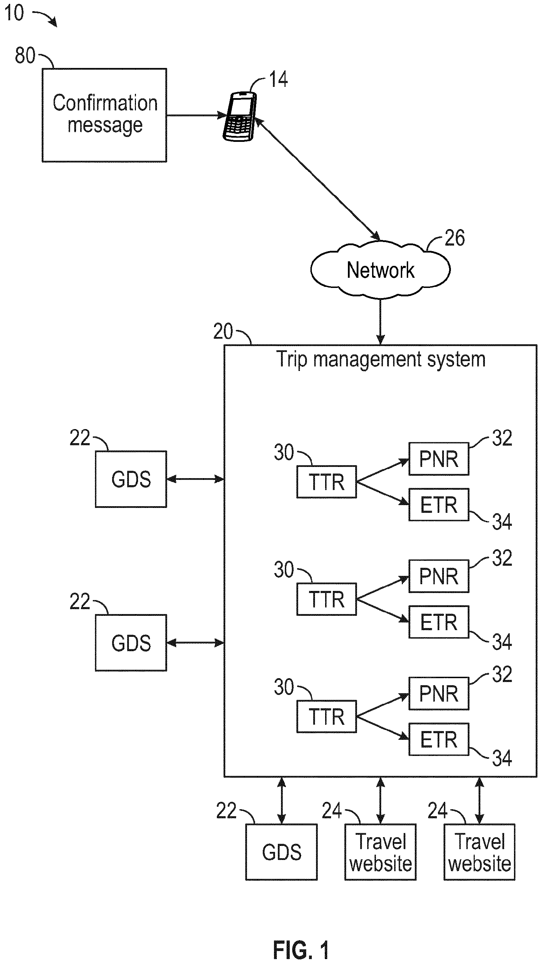

Referring now to FIG. 1, an operating environment 10 in accordance with an embodiment of the invention may include one or more client devices 14 and a trip management system 20. The client devices 14 and the trip management system 20 may communicate through a network 26. The network 26 may include one or more private or public networks (e.g., the Internet) that enable the exchange of data. The trip management system 20 may be in communication with one or more global distribution systems (GDSs) 22 and/or one or more travel websites 24. As explained in greater detail below, the trip management system 20 follows a specific set of rules or instructions in order to update a travel itinerary based on a modification of at least one reservation that is part of the travel itinerary.

The client devices 14 may each comprise a desktop computer, laptop computer, tablet computer, smart phone, or any other suitable computing device. In one embodiment, an end user such as, for example, a traveler, may use a respective client device 14 to book a travel reservation. For example, the end user may launch a browser application, and use the browser application to search for and book travel services by accessing one of the GDSs 22, the travel websites 24, or any other suitable system though the network 26. For example, the traveler may launch a browser application, and use the browser application to search for travel services on the website provided by one of the GDSs 22, the travel website 24, or any other suitable system. The traveler may book a selected travel service by entering payment information into the website. Alternatively, in another embodiment, the client devices 14 may provide travel agents with an interface for accessing the GDS 12 that enables agents to search for and book travel itineraries.

Each GDS 22 may identify travel itineraries including flights from multiple airlines, and may also provide travel itineraries that include services such as train travel, hotel rooms, car rentals, sightseeing, and other travel-related activities. Each GDS 22 may maintain links to a plurality of carrier systems that enable each GDS 22 to route reservation requests from the validating carrier or travel agency to a corresponding operating carrier. The client devices 14 may thereby book flights on multiple airlines via a single connection to the GDS 22. The travel websites 24 may be any website on the world wide web that may be used to book travel reservations such as, but not limited to, airline tickets, hotel rooms, and car rentals.

The client devices 14 may access the trip management system 20 through the network 26. As seen in FIG. 1, the trip management system 20 may include a plurality of travel records, which may be referred to as total travel records (TTRs) 30. The TTRs 30 are each associated with a specific user profile. The user profile may indicate the identity of a traveler or a group of multiple travelers. Each TTR 30 represents a centrally stored location of a specific travel itinerary for the user profile. It is to be appreciated that each TTR 30 may represent a current, an inactive (i.e., past), or a future travel itinerary.

As seen in FIG. 1, each TTR 30 may include an associated passenger name record (PNR) 32 and/or an associated extended travel record (ETR) 34. The PNR 32 is a GDS-specific set of data that includes information about the traveler or group of travelers associated with the user profile. Some examples of the information that may be indicated by the PNR 32 include, but are not limited to, the travel itinerary, fares or fees, and a form of payment used to purchase the travel items that comprise the travel itinerary. The ETR 34 contains similar information as the PNR 32, however it is to be appreciated that the PNR 32 is GDS-specific. That is, the PNR 32 contains all GDS-specific booking information. In contrast, the ETR 34 contains all the booking information related to another, external GDS 22, or even one of the travel websites 24.

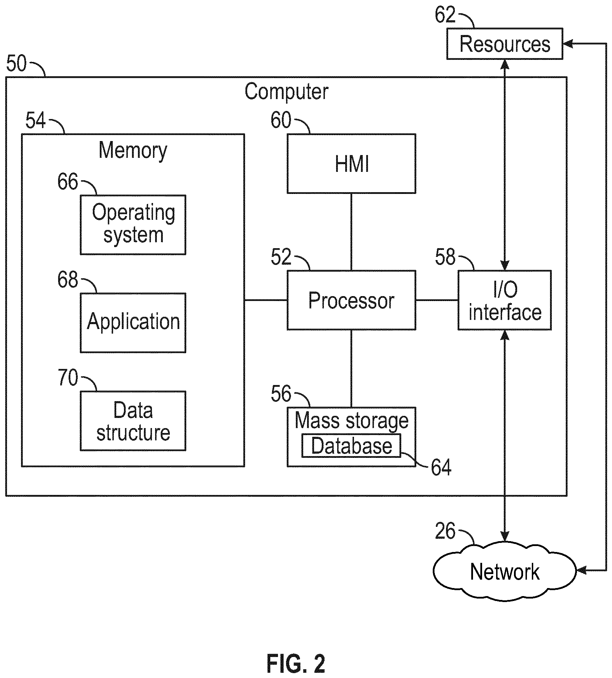

Referring now to FIG. 2, the client devices 14, the trip management system 20, the GDSs 22, and the travel websites 24 of operating environment 10 may be implemented on one or more computer devices or systems, such as exemplary computer system 50. The computer system 50 may include a processor 52, a memory 54, a mass storage memory device 56, an input/output (I/O) interface 58, and a Human Machine Interface (HMI) 60. The computer system 50 may also be operatively coupled to one or more external resources 62 via the network 26 or I/O interface 58. External resources may include, but are not limited to, servers, databases, mass storage devices, peripheral devices, cloud-based network services, or any other suitable computer resource that may be used by the computer system 50.

The processor 52 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 54. Memory 54 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 56 may include data storage devices such as a hard drive, optical drive, tape drive, volatile or non-volatile solid state device, or any other device capable of storing information.

The processor 52 may operate under the control of an operating system 66 that resides in memory 54. The operating system 66 may manage computer resources so that computer program code embodied as one or more computer software applications, such as an application 68 residing in memory 54, may have instructions executed by the processor 52. In an alternative embodiment, the processor 52 may execute the application 48 directly, in which case the operating system 66 may be omitted. One or more data structures 70 may also reside in memory 54, and may be used by the processor 52, operating system 66, or application 68 to store or manipulate data.

The I/O interface 58 may provide a machine interface that operatively couples the processor 32 to other devices and systems, such as the network 26 or external resource 62. The application 68 may thereby work cooperatively with the network 26 or external resource 62 by communicating via the I/O interface 58 to provide the various features, functions, applications, processes, or modules comprising embodiments of the invention. The application 68 may also have program code that is executed by one or more external resources 62, or otherwise rely on functions or signals provided by other system or network components external to the computer system 50. Indeed, given the nearly endless hardware and software configurations possible, persons having ordinary skill in the art will understand that embodiments of the invention may include applications that are located externally to the computer system 50, distributed among multiple computers or other external resources 62, or provided by computing resources (hardware and software) that are provided as a service over the network 26, such as a cloud computing service.

The HMI 60 may be operatively coupled to the processor 52 of computer system 50 in a known manner to allow a user to interact directly with the computer system 50. The HMI 60 may include video or alphanumeric displays, a touch screen, a speaker, and any other suitable audio and visual indicators capable of providing data to the user. The HMI 60 may also include input devices and controls such as an alphanumeric keyboard, a pointing device, keypads, pushbuttons, control knobs, microphones, etc., capable of accepting commands or input from the user and transmitting the entered input to the processor 52.

A database 64 may reside on the mass storage memory device 56, and may be used to collect and organize data used by the various systems and modules described herein. The database 64 may include data and supporting data structures that store and organize the data. In particular, the database 64 may be arranged with any database organization or structure including, but not limited to, a relational database, a hierarchical database, a network database, or combinations thereof. A database management system in the form of a computer software application executing as instructions on the processor 52 may be used to access the information or data stored in records of the database 64 in response to a query, where a query may be dynamically determined and executed by the operating system 66, other applications 68, or one or more modules.

Turning back to FIG. 1, the client device 14 may receive a confirmation message 80. The confirmation message 80 may include updated information regarding at least one travel reservation that has been updated or modified. For example, a particular travel itinerary may include several reservations such as a reservation for airline travel to a destination city, a separate reservation for a hotel in the destination city, and a car rental. The confirmation message 80 may include information indicating that some aspect of the airline travel has changed. In one embodiment the confirmation message 80 may indicate that the outbound portion of the airline travel has changed its departure time from 5:30 pm to 8:30 pm. It is to be appreciated that this embodiment is merely exemplary in nature, and the confirmation message 80 may convey any other information pertaining to a travel reservation.

The confirmation message 80 may be any type of electronic communication that may be sent to the client device 14 such as, but not limited to, an email, a text message, or a message communicated by a social media platform. The client device 14 may include a parser that interprets the confirmation message 80 and converts the confirmation message 80 into discrete attributes. The discrete attributes may indicate whether an existing reservation should be updated to take into account any changes to an existing reservation or, alternatively, if a new reservation has been made that may be added to an existing travel itinerary. For example, if the confirmation message 80 is an email and the client device 14 includes an email parser, then the email parser may create discrete attributes such as, but not limited to, the sender, the recipient, the subject of the email, the traveler or travelers associated with the email, the specific reservation or reservations being referenced in the email, and any updated information regarding the specific reservation or reservations referenced in the email. In another embodiment, if the confirmation message 80 is a text message, then the parser may create a discrete attribute that indicates the mobile number associated with the text message.

Once the parser of the client device 14 converts the confirmation message 80 into discrete attributes, the client device 14 may then send the discrete attributes of the confirmation message 80 over the network 26 to the trip management system 20. In response to receiving the confirmation message 80, the trip management system 20 then follows specific rules or instructions in order to update the existing reservation, which is described in greater detail below. Specifically, in response to receiving the confirmation message 80, the trip management system 20 determines if the traveler or travelers indicated in the confirmation message 80 are related to the user profile associated with the TTRs 30. In other words, the trip management system 20 determines if the modifications to the travel reservations indicated within the confirmation message 80 are for the specific traveler or travelers associated with the TTRs 30. In one embodiment, the trip management system 20 may determine the travelers indicated in the confirmation message 80 by an email address, a mobile number, or an account identifier.

It is to be appreciated that the trip management system 20 may implement an acceptance rule in order to ensure that the information conveyed by the confirmation message 80 is valid. In particular, the trip management system 20 may determine if enough information exists for the travel reservations indicated within the confirmation message 80 to update a travel itinerary. For example, the trip management system 20 may determine if each of the travel reservations have a start date as well as an end date before further analysis and updates may be performed.

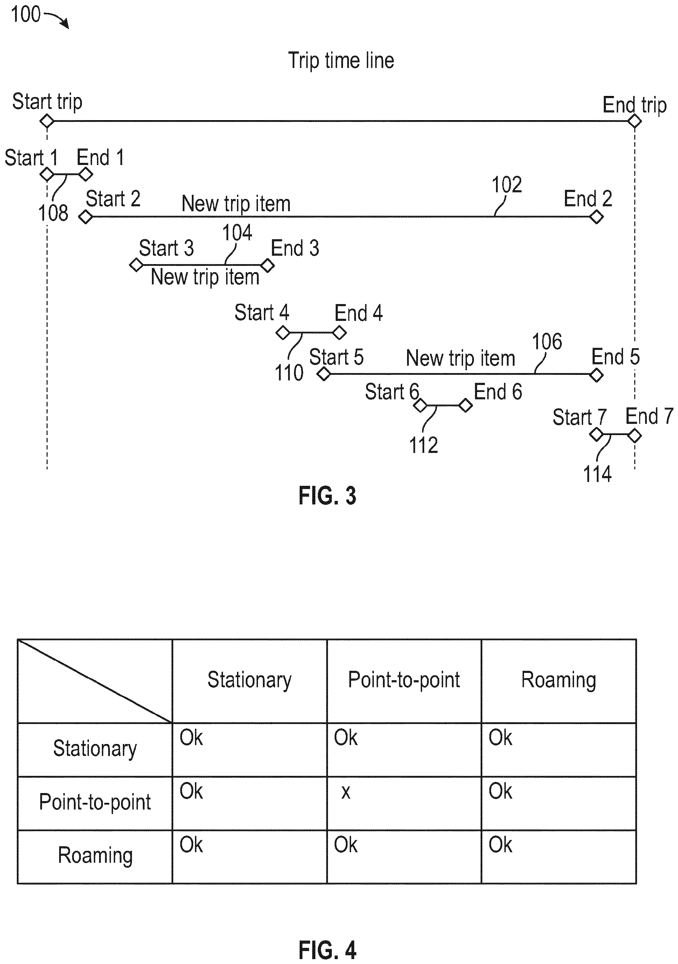

In response to the travel reservation indicated in the confirmation message 80 being associated with the user profile and being valid with a start date and an end date, the trip management system 20 creates a new trip item for each reservation included within the confirmation message 80. The trip item is indicative of a particular reservation included in the travel itinerary. FIG. 3 is an exemplary figure illustrating a chronological arrangement or timeline 100 of a specific travel itinerary that is represented by one of the TTRs 30.

Referring now to both FIGS. 1 and 3, the trip management system 20 combines the new trip items with each TTR 30. It is to be appreciated that there is logic to retrieve all of the TTRs 30, even if the TTR 30 is no longer active (i.e., the trip has occurred in the past). As seen in FIG. 3, the timeline 100 includes three new trip items 102, 104, and 106, where each new trip item represents a single travel reservation. A plurality of existing trip items 108, 110, 112, and 114 and the new trip items 102, 104, and 106 may be chronologically ordered in order to create the timeline 100. The existing trip items 108, 110, 112, and 114 each represent existing travel reservations that are part of the travel itinerary. The existing trip items 108, 110, 112, and 114 and the new trip items 102, 104, and 106 may be chronologically ordered by their respective start date and start time. In one embodiment, the existing trip items 108, 110, 112, and 114 and the new trip items 102, 104, and 106 may first be converted from a local date and time (e.g., a time and date based on Eastern Standard Time (EST)) into Coordinated Universal Time (UTC).

Sometimes a travel reservation associated with one of the ETRs 34 may have a start date but no end date. If an existing ETR 34 has a start date and no end date, then the trip management system 20 assumes that the end date and time is equal to the start date and time. In one exemplary embodiment, if the existing ETR 34 does not include a start time and end time, then a start time of 00:01 and an end time of 23:59 is assigned.

Continuing to refer to both FIGS. 1 and 3, the trip management system 20 assigns a score to each TTR 30. The score is based on the compatibility of the existing trip items 108, 110, 112 and 114 with the new trip items 102, 104, and 106. As explained in greater detail below, the score of each respective TTR 30 may be determined based on an overlap of the new trip items 102, 104, and 106 with the existing trip items 108, 110, 112, and 114, the geography of the various trip items, and the number of travelers indicated in the confirmation message 80 are actually part of the trip.

As seen in the timeline 100 illustrated in FIG. 3, some of the new trip items 102, 104, and 106 may overlap with another trip item. For example, in the embodiment as shown, new trip item 102 overlaps with new trip items 104 and 106, as well as existing trip items 110 and 112. If one of the new trip items 102, 104, and 106 does not overlap with any other trip item, then a positive score may be assigned to the TTR 30 associated with the timeline 100. Although some of the new trip items 102, 104, and 106 may overlap with one another or with one of the existing trip items, it is to be appreciated that sometime the new trip items 102, 104, and 106 may not overlap with another trip item, and may be referred to as an incoherent overlap. This determination of an incoherent overlap is based on the type or nature of travel that is associated with two overlapping trip items. For example, those of ordinary skill in the art will readily appreciate that it is impossible for a traveler to be onboard a flight and a train at the same time. Thus, two trip items that each represent either air travel or train travel may not overlap one another. However, a traveler could be onboard a flight, while at the same time having a car rental reservation, or a hotel reservation. It is to be appreciated that the trip management system 20 may already assume that the existing trip items 108, 110, 112, and 114 so not contain incoherent overlaps with one another.

In one exemplary embodiment, the new trip items 102, 104, and 106 may be classified into three categories: stationary, point-to-point, and roaming. The stationary category represents travel reservations that include a static location such as, for example, a hotel or restaurant reservation. The point-to-point category represents travel reservations that transport a traveler from one location to another such as, for example, an airline flight or a train. The roaming category represents travel reservations that provide a traveler with a vehicle, however, the traveler does not need to be situated within the vehicle for the entire time. Some examples of roaming reservations include, for example, bicycle and automobile rentals.

FIG. 4 is an illustration of a chart summarizing the three different types of trip items, and the rules that determine if the trip items may overlap with one another. In one exemplary embodiment, if two trip items are classified into one of the boxes marked 'OK' then a score of zero points is assigned to the respective TTR 30. Indeed, a traveler could potentially be on an airline flight, which is a point-to-point trip item, and at the same time have a reservation for a rental car, which is a roaming reservation. However, if the two trip items are classified into the box marked 'X', this represents an incoherent overlap. A negative score is assigned to the respective TTR 30 having an incoherent overlap. As seen in FIG. 4, the 'X' indicates that a point-to-point trip item may not overlap with another point-to-point trip item. In one embodiment a negative score of -100 points is assigned to the respective TTR 30 having an incoherent overlap of two trip items.

Turning back to FIGS. 1 and 3, assigning the respective score of each of the TTRs 30 combined with the new trip items 102, 104, and 106 may also include comparing cities between the various start and end locations of each particular trip item. In particular, the trip management system 20 may reward new trip items that have a start or origin city that is the same as an end or arrival city from a previous travel segment. Similarly, the trip management system 20 may also reward new trip items that have an end or arrival city that is the same as a start or origin city of a subsequent travel segment. Those of ordinary skill in the art will readily appreciate that this approach ensures continuity during a journey.

With specific reference to FIG. 3, the trip management system 20 may compare an end location of a proceeding trip item with a start location of the new trip item. In response to the proceeding trip item matching the start location of the new trip item, the trip management system 20 assigns positive points to the respective TTR 30. Moreover, a start location of a subsequent trip item may be compared with an end location of the new trip item, and in response to the start location of the subsequent trip item matching the end location of the new trip item, the trip management system 20 assign positive points to the respective TTR 30. The trip management system 20 may also assign points to a new trip item if the new trip item is ordered either first or last within the timeline 100.

For example, in one embodiment the new trip item 102 may have a start location Start2 of New York City. An end location End 1 of the existing trip item 108 may also be in New York City as well. Thus, the trip management system 20 may assign a positive score, such as +5 points, to the respective TTR 30. The trip management system 20 may further compare an end location End3 of the new trip item 104 with a start location Start4 of the existing travel item 110 as well as a start location Start5 of the new trip item 106. If the end location End3 of the new trip item 104 matches the start location Start4 of the existing trip item 110, then another +5 points may be assigned to the respective TTR 30. Moreover, if the end location End3 of the new trip item 104 matches the start location Start5 of the new trip item 106, then another +5 points may be assigned to the respective TTR 30. Furthermore, if an end location End4 of the existing trip item 110 matches a start location Start6 of the existing trip item 112, then the trip management system 20 may also assign another +5 points to the respective TTR. Finally, the trip management system 20 may compare an end location End2 of the new trip item 102 with a start location Start7 with the existing trip item 114, and if the locations match then the trip management system 20 assigns +5 points. The trip management system 20 may also compare an end location End5 of the new trip item 106 with the start location Start7 of the existing trip item 114, and if the locations match, another +5 points may be assigned to the respective TTR 30 as well.

Referring back to FIG. 1, the trip management system 20 may also score the respective TTRs 30 based on whether the passengers indicated within the confirmation message 80 match the passengers indicated within a respective PNR 32. Specifically, the trip management system 20 may compare a first name and a last name of each passenger indicated in the confirmation message 80 against the first and last names of the passengers included within each PNR 32 for each TTR 30. If the first and last names of each passenger in the confirmation message 80 match each and every name listed in a specific PNR 32, then the trip management system 20 may assign a positive score to the particular TTR 30. For example, in one embodiment, the trip management system 20 may assign +50 points to the TTR 30 if the passenger names match, and 0 points if the passenger names do not match.

Sometimes, one or more of the TTRs 30 may include no respective PNR 32, but instead includes an ETR 34. In this instance, then the trip management system 20 may determine how many passengers are indicated in the confirmation message 80. If the number of passengers indicated in the confirmation message 80 match the number of passengers indicated within the ETR 34, then the trip management system may assign a positive score to the respective TTR 30. For example, in one embodiment, the trip management system 20 may assign a score of +20 points.

Continuing to refer to FIG. 1, the trip management system 20 may continue to score each of the TTRs 30 until one of the TTRs 30 reach a maximum predetermined score. Once this happens, the trip management system 20 may then stop scoring the individual TTRs 30, and then selects the TTR 30 having the maximum score. The trip management system 20 may then update the respective TTR 30 with the new trip items. However, in some instances the selected TTR 30 may have no write access. In response to the selected TTR 30 having no write access, the trip management system 20 may create a new travel record or TTR 30 that includes the updated trip information.

In one embodiment, the respective scores associated with the TTRs 30 may never reach the maximum predetermined score. If each of the TTRs 30 are less than the predetermined score, then the trip management system 20 calculates a threshold numerical value. The threshold numerical value is determined by the number of trip items associated with each TTR 30 that does not require a new booking multiplied by a predetermined factor. In one exemplary approach, the predetermined factor is 10. If one of the TTRs 30 is greater than or equal to the threshold numerical value, then the trip management system 20 may select the respective TTR 30 to update with the new trip items.

Referring generally to the figures, the disclosed trip management system 20 provides a unique improvement in computer-related technology by allowing computer performance of a function that was not previously performed by a computer. Specifically, the disclosed trip management system 20 updates an entire travel itinerary based on a change to only one or a portion of the travel bookings that are part of the entire itinerary through the use of specific rules, instead of subjective evaluations that were previously performed manually. Indeed, travelers and reservation agents had previously determined the updates to the travel itinerary. Specifically, these individuals would subjectively evaluate and modify various travel reservations that were part of a single travel itinerary based on a change to a single travel reservation, which was a difficult, stressful, and time consuming task. Moreover, it is to be appreciated that the specific rules followed by the trip management system 20 such as, but not limited to, assigning a respective score to each of the travel records in order to determine compatibility, have not previously been used by travelers or reservation agents to update travel itineraries.

Furthermore, the disclosed trip management system 20 follows a non-conventional and non-generic approach to update an existing travel reservation. Indeed, the combination of combining a new trip item with all travel records, assigning a respective score to each travel record, and updating the existing reservation by selecting the travel record having the highest score is a non-conventional approach to update an existing travel reservation. It should be appreciated that unlike some existing systems currently available that only have the capability to update trips that have been made with a single GDS, the disclosed trip management system 20 has the ability to update travel itineraries created using various GDSs, or even travel websites. Indeed, travelers and reservation agents typically utilize more than one platform or GDS when booking multiple travel related reservations for a particular trip. Furthermore, the disclosed trip management system also provides a unified view of a specific travel itinerary that includes all travel booking, regardless of the travel platform that was used to create the particular reservation.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative embodiments, the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A system for updating an entire travel itinerary based on a modification to at least one reservation that is part of the entire travel itinerary, the system comprising:
one or more processors; and
a memory coupled to the one or more processors, the memory storing data comprising program code that, when executed by the one or more processors, causes the system to:
receive at least one confirmation message, wherein the least one confirmation message includes updated information regarding the at least one reservation;
determine that the at least one reservation is associated with a user profile, wherein the user profile is associated with a plurality of travel records;
in response to the at least one reservation being associated with the user profile, create a new trip item for each reservation included with the at least one confirmation message;
combine the new trip item with each of the plurality of travel records;
assign a respective score to each of the plurality of travel records that are combined with the new trip item, wherein the respective score is based on a compatibility of a respective travel record combined with the new trip item;
select a specific travel record to update with the new trip item based on the respective scores of the plurality of travel records;
determine that the specific travel record that was selected includes write access; and
in response to determining that the specific travel record includes write access, updating the specific travel record with the new trip item.

2. The system of claim 1 wherein the program code, when executed by the one or more processors, further causes the system to:
determine that the specific travel record that was selected includes no write access; and
in response to the specific travel record having no write access, create a new travel record, wherein the new travel record is updated with the new trip item.

3. The system of claim 1 or claim 2 wherein the program code, when executed by the one or more processors, further causes the system to: chronologically order a plurality of trip items and the new trip item to form a timeline, wherein the plurality of trip items are each associated with one of the plurality of travel records.

4. The system of claim 3 wherein the program code causes the system to assign the respective score to each of the travel records that are combined with the new trip item by causing the system to:
determining that the new trip item overlaps with one or more of the plurality of trip items for each of the plurality of travel records; and
in response to determining that the new trip item does not overlap with one or more of the trip items, assigning positive points to the respective score of one of the plurality of travel records.

5. The system of claim 4 wherein the program code causes the system to assign the respective score to each of the travel records that are combined with the new trip item by causing the system to:
classify the new trip item and each of the plurality of trip items into categories, wherein the categories include stationary, point-to-point, and roaming; and
determine that both the new trip item and the one or more of the plurality of trip items that overlap are classified as point-to-point; and
in response to determining that the new trip item and the one or more of the plurality of trip items that overlap are classified as point-to-point, assign negative points to the respective score of one of the plurality of travel records.

6. The system of any one of claims 3 to 5 wherein the program code causes the system to assign the respective score to each of the travel records that are combined with the new trip item by causing the system to:
compare an end location of a preceding trip item with a start location of the new trip item;
in response to the end location of the preceding trip item matching the start location of the new trip item, assign positive points to the respective score of one of the plurality of travel records;
compare a start location of a subsequent trip item with an end location of the new trip item;
in response to the start location of the subsequent trip item matching the end location of the new trip item, assign positive points to the respective score of one of the plurality of travel records; and
in response to the new trip item being ordered either first or last in the timeline, assign positive points the respective score of one of the plurality of travel records.

7. The system of any one of claims 3 to 6 wherein the program code causes the system to assign the respective score to each of the travel records that are combined with the new trip item by causing the system to:
determine that passengers included within the at least one confirmation message match a passenger name record associated with each of the travel record; and
in response to the passengers included with the at least one confirmation message matching the passenger name record, assign positive points to the respective score of one of the plurality of travel records.

8. The system of any one of claims 3 to 6 wherein the program code causes the system to assign the respective score to each of the travel records that are combined with the new trip item by causing the system to:
determine that a number of passengers included with the at least one confirmation message is less than a total number of passengers included in a passenger name record associated with each of the plurality of travel records; and
in response to the number of passengers included with the at least one confirmation message being less than the total number of passengers, assign positive points to the respective score of one of the plurality of travel records.

9. The system of any one of claims 1 to 8 wherein the program code, when executed by the one or more processors, further causes the system to:
determine that the respective score associated with one of the plurality of travel records is greater than or equal to a predetermined score; and
in response to determining that the respective score associated with one of the plurality of travel records is greater than or equal to the predetermined score, update the specific travel record as the selected travel record.

10. The system of claim 9 wherein the program code causes the system to select the specific travel record to update with the new trip item based on the respective scores of the plurality of travel records by causing the system to:
determine that the respective scores associated with the plurality of travel records are less than the predetermined score;
in response to determining the respective scores associated with the plurality of travel records are less than the predetermined score, calculate a threshold numerical value given by a number of trip items associated with each travel record that does not require a new booking multiplied by a predetermined factor;
determine that the respective score associated with the specific travel record is greater than or equal to the threshold numerical value, wherein the threshold numerical value is less than the predetermined score; and
in response to determining the respective score associated with the specific travel record is greater than or equal to the threshold numerical value, update one of the plurality of travel records as the selected travel record.

11. A method of updating an entire travel itinerary based on a modification to at least one reservation that is part of the entire travel itinerary, the method comprising:
receiving at least one confirmation message by a computer, wherein the least one confirmation message includes updated information regarding the at least one reservation;
determining, by the computer, that the at least one reservation is associated with a user profile, wherein the user profile is associated with a plurality of travel records;
in response to the at least one reservation being associated with the user profile, creating, by the computer, a new trip item for each reservation included with the at least one confirmation message;
combining the new trip item with each of the plurality of travel records;
assign a respective score to each of the plurality of travel records that are combined with the new trip item by the computer, wherein the respective score is based on a compatibility of a respective travel record combined with the new trip item;
selecting, by the computer, a specific travel record to update with the new trip item based on the respective scores of the plurality of travel records;
determining, by the computer, that the specific travel record that was selected includes write access; and
in response to determining that the specific travel record includes write access, updating the specific travel record with the new trip item.

12. The method of claim 11 further comprising method steps corresponding to the functions of the program code of any one of claims 2 to 10.

13. A computer program comprising program code instructions to execute the method steps according to claim 11 or claim 12 when said program is executed on a computer.
